# FASCICULE DE BREVET EUROPEEN

(11) **EP 0 652 184 B1**
(45) Date de publication et mention de la délivrance du brevet: **15.01.1997**
(21) Numéro de dépôt: 94402493.4
(22) Date de dépôt: 04.11.1994
(51) Int. Cl.: C03B 19/12, G02B 6/38

(54) **Procédé de réalisation d'une ébauche pour multiférule en verre de silice, et ébauche ainsi obtenue**
Verfahren zum Herstellen einer Vorform für Multisteckerstifte aus Quarz und die so erhaltende Vorform
Process of making a preform for multi-ferrules of silica glass and preform so obtained

(30) Priorité: 08.11.1993 FR 9313262
(43) Date de publication de la demande: 10.05.1995
(73) Titulaire: ALCATEL CABLE INTERFACE, F-08330 Vrigne aux Bois (FR)
(72) Inventeur: Campion, Jean-Florent, F-91290 Arpajon (FR)
(74) Mandataire: Feray, Valérie

(56) Documents cités:
- EP-A- 0 392 599
- EP-A- 0 473 104
- DE-A- 3 435 772
- FR-A- 2 669 119
- FR-A- 2 680 879
- PATENT ABSTRACTS OF JAPAN vol. 10, no. 287 (C-375) 30 Septembre 1986 & JP-A-61 106 434 (FUJIKURA LTD.) 24 Mai 1986
- PATENT ABSTRACTS OF JAPAN vol. 10, no. 366 (C-390) 6 Décembre 1986 & JP-A-61 163 133 (SEIKO EPSON CORP.) 23 Juillet 1986
- PATENT ABSTRACTS OF JAPAN vol. 12, no. 496 (C-555) 23 Décembre 1988 & JP-A-63 206 321 (NTT CORP.) 25 Août 1988

## Description

La présente invention concerne un procédé de réalisation d'une ébauche pour multiferrules en verre de silice; ces multiferrules sont destinées au raccordement d'un assemblage de fibres optiques à un autre, ou à un guide d'onde optique.

On sait que le raccordement de fibres optiques, pour télécommunications par exemple, nécessite un guidage des extrémités de ces fibres permettant d'atteindre une grande précision d'alignement.

Dans l'art antérieur, ces multiferrules étaient habituellement réalisées de manière individuelle en céramique usinée ce qui est complexe et onéreux. En outre, le fait que la multiferrule ait un indice optique différent de celui des fibres entraîne des phénomènes de réflexions de Fresnel qui constituent des réflexions parasites gênantes.

On a proposé plus récemment dans les brevets FR-A-2669119 et FR-A-2680879 de partir d'une ébauche en matériau vitreux de section bien définie dans laquelle ont été usinés précisément des alésages cylindriques, d'axes parallèles entre eux; on dispose ensuite cette ébauche verticalement dans une installation du même type qu'une installation de fibrage pour fibres optiques, et on effectue un étirage de manière à obtenir une multiferrule aux dimensions souhaitées.

Le problème qui se pose est le coût de l'usinage préalable des alésages cylindriques de l'ébauche.

On connaît par ailleurs la demande de brevet EP-0 329 599 qui concerne un procédé de fabrication d'une préforme pour fibre optique selon lequel un barreau et un tube d'indices de réfraction distincts sont réalisés selon les étapes suivantes :
- préparation d'un mélange comportant 50% en masse de silice en poudre, et 1,5% en masse de fluorure d'ammonium,
- coulée du mélange dans un moule,
- prise en masse du mélange,
- séchage de la pièce obtenue après l'avoir retirée du moule.

Le barreau est ensuite densifié dans un four ; le tube est rendu solidaire du barreau puis densifié, également dans une four, afin d'obtenir la préforme désirée.

La présente invention a pour but de proposer un procédé bien reproductible permettant d'éviter un tel usinage, tout en aboutissant à une ébauche ayant toute la précision reprise pour être étirée et aboutir à une multiferrule aux dimensions désirées.

La présente invention a pour objet un procédé de réalisation d'une ébauche pour multiferrule en verre de silice, ladite ébauche étant constituée par une pièce en verre de silice présentant une pluralité de canaux longitudinaux parallèles entre eux, caractérisé par le fait que l'on effectue les opérations suivantes:
- préparation d'une barbotine comportant au moins 50% en poids de silice synthétique de surface spécifique au moins égale à 40m²/gramme, et un additif choisi parmi le fluorure d'ammonium, le bifluorure d'ammonium dans une proportion au moins égale à 2% en poids, ou l'acide fluorhydrique dans une proportion inférieure ou égale à 0,1 mole par litre.
- coulée de ladite barbotine dans un moule cylindrique en matière plastique contenant intérieurement à l'emplacement desdits canaux une pluralité de tiges amovibles, de section circulaire ou en losange,
- prise en masse à la température ordinaire,
- séchage pendant au moins huit heures à une température inférieure ou égale à 60°C,
- démoulage,
- traitement thermique de densification entre 1300°C et 1450°C pendant une durée comprise entre une et trois heures sous vide ou sous atmosphère d'hélium.

Lors du séchage la pièce moulée subit un retrait compris entre 10% et 15%, retrait permettant le démoulage.

Lors du traitement thermique de densification, le retrait est compris entre 25% et 35%, la densité passe de 1,3 à 2,2.

Les dimensions des tiges amovibles internes au moule sont prévues pour tenir compte de ces deux types de retrait.

On obtient alors une ébauche en silice transparente constituée par une pièce massive dense, dont la longueur peut aller jusqu'à 1 mètre et le diamètre jusqu'à 60mm, pourvue de canaux n'ayant nécessité aucun usinage; les conditions opératoires du procédé définies plus haut permettent d'obtenir de manière reproductible une telle pièce sans casse, ce qui ne s'était jamais fait jusqu'à présent.

D'autres caractéristiques et avantages de la présente invention apparaîtront au cours de la description suivante d'un mode de réalisation donné à titre illustratif mais nullement limitatif. Dans le dessin annexé:
- La figure 1 représente très schématiquement en coupe un moule en matière plastique utilisé lors de la mise en oeuvre du procédé selon l'invention.
- La figure 2 montre très schématiquement en perspective l'ébauche obtenue lors de la mise en oeuvre du procédé selon l'invention.
- La figure 3 est un schéma partiel très simplifié du haut d'une tour de fibrage en vue de l'étirage d'une ébauche selon l'invention.

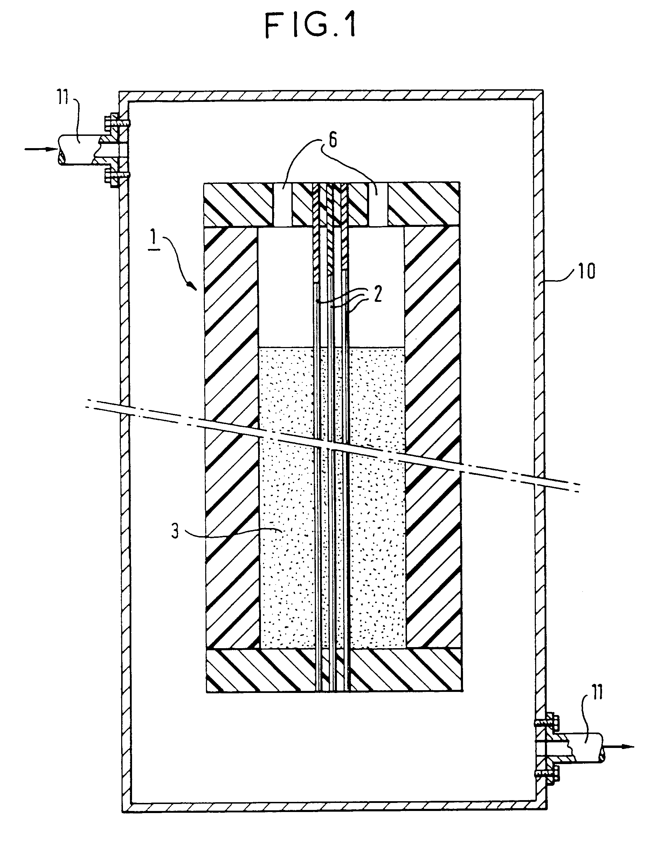

On prépare une barbotine en dispersant 1200g de silice pyrogénée de la marque AEROSIL Ox-50, de surface spécifique 50m²/gramme dans 600g d'eau désionisée. Les grains de silice ont de préférence un diamètre inférieur à 75µm. On met en oeuvre un mélangeur de type turbosphère de la Société MORITZ, ayant une capacité de 10 litres. On ajoute 5g de fluorure d'ammonium.
La barbotine 3 est coulée par une ouverture 6 dans un moule 1 en polyéthylène de diamètre intérieur 64mm, de longueur 1000mm contenant trois cylindres amovibles 2 en polyéthylène de diamètre 5mm (cf figure 1). Le moule 1 a été préalablement nettoyé à l'alcool pour que soit éliminée toute impureté pouvant constituer un point d'accrochage. Il est disposé dans une enceinte 10.

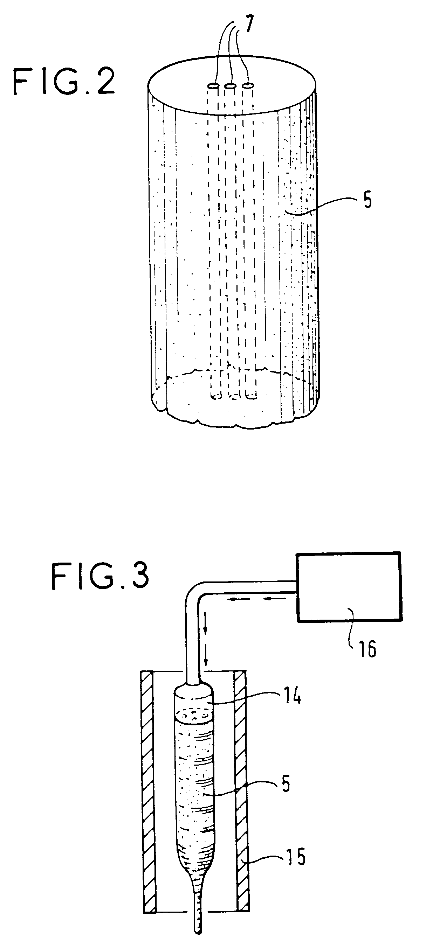

La prise en masse de la pièce apparaît en moins de 30 minutes. La pièce est séchée à 40°C sous courant d'azote, schématisé par les flèches 11, pendant 12 heures puis démoulée. Elle a la forme d'un cylindre référencé 5 sur la figure 2 avec ses trois canaux 7. Les dimensions de la pièce 5 sont respectivement 57,6mm pour le diamètre et 714mm pour la longueur; sa densité est de 1,3.

On effectue ensuite un traitement de densification à 1400°C pendant deux heures sous balayage d'hélium.

On obtient une ébauche finale en silice transparente de densité égale à 2,2, de longueur 500mm, de diamètre 40mm, avec trois cylindres creux de diamètre 3mm.

Cette ébauche est étirée dans un four de fibrage à la vitesse de 5 mètres par minute à une température constante, de l'ordre de 1700°C. Un schéma très simplifié de l'installation apparaît dans la figure 3. On a simplement représenté le four de fibrage 15 et un dispositif 14 pour maintenir l'ébauche 5.

Ce dispositif 14 est associé à des moyens 16 assurant une surpression d'argon dans les canaux 7 afin de maintenir les diamètres des orifices des multiferrules en formation à une dimension constante.

Les multiferrules obtenues ont pour dimensions:
- diamètre extérieur : 1,7mm
- longueur : 30mm
- diamètre de chaque orifice : 127µm
- distance entre deux diamètres d'orifice : 250µm.

Bien entendu l'invention n'est pas limitée à l'exemple de réalisation qui vient d'être décrit. Ainsi, le polyéthylène du moule peut être remplacé par du polytétrafluoréthylène. La surpression d'argon peut être remplacée par la mise en oeuvre d'hélium ou d'azote.

## Revendications

1. Procédé de réalisation d'une ébauche pour multiférule en verre de silice, ladite ébauche étant constituée par une pièce en verre de silice présentant une pluralité de canaux longitudinaux parallèles entre eux, caractérisé par le fait que l'on effectue les opérations suivantes:
- préparation d'une barbotine comportant au moins 50% en poids de silice synthétique de surface spécifique au moins égale à 40m²/gramme, et un additif choisi parmi le fluorure d'ammonium, le bifluorure d'ammonium dans une proportion au moins égale à 2% en poids, ou l'acide fluorhydrique dans une proportion inférieure où égale à 0,1 mole par litre,
- coulée de ladite barbotine dans un moule cylindrique en matière plastique contenant intérieurement à l'emplacement desdits canaux une pluralité de tiges amovibles, de section circulaire ou en losange,
- prise en masse à la température ordinaire,
- séchage pendant au moins huit heures à une température inférieure ou égale à 60°C,
- démoulage,
- traitement thermique de densification entre 1300°C et 1450°C pendant une durée comprise entre une et trois heures sous vide ou sous atmosphère d'hélium.

## Claims

1. A method of making a multi-ferrule blank out of silica glass, the blank being constituted by a silica glass part having a plurality of mutually parallel longitudinal channels, and the method being characterized by the fact that it comprises the following operations:
preparing a slip having at least 50% by weight synthetic silica with specific area of not less than 40 m²/g, and an additive selected from among ammonium fluoride, ammonium bifluoride at a concentration of not less than 2% by weight, or hydrofluoric acid at a concentration of not more than 0.1 moles per liter;
casting said slip into a cylindrical mold made of plastics material and containing a plurality of removable rods of circular or lozenge section at the locations of said channels;
allowing to set at room temperature;
drying for at least 8 hours at a temperature of not more than 60°C;
unmolding; and
applying densification heat treatment in the range 1300°C to 1450° for a period lying in the range 1 hour to 3 hours in a vacuum or in an atmosphere of helium.

## Patentansprüche

1. Verfahren zur Herstellung eines Rohlings für einen Vielfachverbinder aus Quarzglas, wobei der Rohling aus einem Quarzglasbauteil besteht, der mehrere zueinander parallele Längskanäle besitzt, dadurch gekennzeichnet, daß man die folgenden Verfahrensschritte durchführt:
- Vorbereitung eines Schlickers aus mindestens 50 Gew.% synthetischen Siliziumoxids einer spezifischen Oberfläche von mindestens 40 m²/g und aus einem Zusatz, der aus Ammoniumfluorid, Ammoniumbifluorid mit einem Anteil von mindestens 2 Gew.% oder Flußsäure mit einem Anteil von höchstens 0,1 Mol je Liter gebildet wird,
- Gießen dieses Schlickers in eine zylindrische Gießform aus Kunststoff, die innen an den Stellen der Kanäle entfernbare Stäbe mit Kreis- oder Rautenquerschnitt aufweist,
- Abbinden bei Umgebungstemperatur,
- Trocknen während mindestens 8 Stunden bei einer Temperatur von höchstens 60°C,
- Entformen,
- Wärmebehandlung zur Verdichtung zwischen 1300 und 1450°C während einer Zeitdauer zwischen einer und drei Stunden in Vakuum oder Heliumatomsphäre.
